# EUROPEAN PATENT APPLICATION

(11) **EP 2 843 952 A1**
(43) Date of publication of application: **04.03.2015**
(21) Application number: 14183166.9
(22) Date of filing: 02.09.2014
(51) Int. Cl.: H04N 19/597

(54) **Methods and apparatuses for predicting depth quadtree in three-dimensional video**

(30) Priority: 02.09.2013 KR 20130104694; 27.08.2014 KR 20140112614
(71) Applicant: Humax Holdings Co., Ltd., Gyeonggi-do 449-934 (KR)
(72) Inventor: Yie, Alex Chungku, 403-762 Incheon (KR); Lee, Yong Jae, 463-914 Seongnam-si (KR); Kim, Hui, 472-877 Namyangju-si (KR)
(74) Representative: Zardi, Marco

(57) **Abstract**

A method of predicting and encoding depth information in a multi-view video includes encoding, by an encoding apparatus, depth information collocated with a texture of a current multi-view video picture in linkage with split information of a coding unit of the texture of the current multi-view video picture, the coding unit having a quadtree structure. The quantity of encoded data of depth information to be transmitted and complexity of encoding and decoding may be reduced by predicting and encoding depth information collocated with a texture of a current multi-view video picture in linkage with split information of a coding unit having a quadtree structure of the texture of the current multi-view video picture.

## Description

### BACKGROUND OF THE INVENTION

### Field of the invention

The present invention relates to methods and apparatuses for encoding and decoding a three-dimensional (hereinafter referred to as '3D') image. More particularly, the present invention relates to methods and apparatuses for predicting a depth quadtree in a 3D video.

### Related Art

In general, the image compression method uses inter prediction and intra prediction technology to remove redundancy of pictures in order to improve compression efficiency.

A method of encoding an image using the inter prediction compresses the image by removing spatial redundancy between pictures. For example, the method of encoding the image using the inter prediction includes a motion compensation prediction encoding method.

The motion compensation prediction encoding searches a region similar to a current coded block from at least one reference picture before and/or after a current encoded picture to generate a motion vector (MV), and Discrete Cosine Transforms (DCT), quantizes, entropy-codes, and transmits a residue value of a prediction block obtained by performing motion compensation and a residue value of a current prediction unit using the generated motion vector.

In a case of inter prediction for motion compensation, one picture is divided into a plurality of blocks having a predetermined size to generate a MV, and motion compensation is performed using the generated motion vector. A separate motion parameter with respect to each prediction block obtained by performing the motion compensation is transmitted to a decoder.

In a case of the 3D image, each pixel includes depth information as well as pixel information due to a characteristic of the image, and an encoder may obtain the depth information to transmit multi-view video image information and depth information to the decoder.

### SUMMARY OF THE INVENTION

The disclosure has been made in view of the above problems, and provides a method capable of reducing the quantity of transmitted encoded data transmitted when predicting and encoding depth information in a case of a 3D multi-view image, and an apparatus thereof.

In some example embodiments, a method of predicting and encoding depth information in a multi-view video includes encoding, by an encoding apparatus, depth information collocated with a texture of a current multi-view video picture in linkage with split information of a coding unit of the texture of the current multi-view video picture, the coding unit having a quadtree structure.

The method may further include distinguishing a foreground and a background of the texture of the current multi-view video picture to differently determine whether to transmit bit information or not depending upon the foreground and the background, the bit information indicating whether to perform a split operation on the depth information collocated with the texture of the current multi-view video picture.

The quantity of transmitted encoded data of depth information may be reduced by predicting and encoding depth information collocated with a texture of a current multi-view video picture in linkage with split information of a coding unit (hereinafter referred to as 'CU') of the texture of the current multi-view video picture, the coding unit having a quadtree structure.

The quantity of transmitted encoded data of depth information and the complexity of encoding and decoding can be reduced by distinguishing a foreground and a background of the texture of the current multi-view video picture to differently determine whether to transmit bit information or not depending upon the foreground and the background, the bit information indicating whether to perform a split operation on the depth information collocated with the texture of the current multi-view video picture.

### BRIEF DESCRIPTION OF THE DRAWINGS

The objects, features and advantages of the disclosure will be more apparent from the following detailed description in conjunction with the accompanying drawings, in which:
FIGS. 1 and 2 are conceptual diagrams illustrating a method of predicting and encoding depth information collocated with a texture of a 3D multi-view video picture in linkage with split information of a quadtree coding unit of the texture of the 3D multi-view video picture according to an exemplary embodiment of the present invention; and
FIG. 3 is a conceptual diagram illustrating a recursive coding unit structure of a CU according to an exemplary embodiment of the present invention.

### DETAILED DESCRIPTION

Exemplary embodiments of the disclosure are described with reference to the accompanying drawings in detail. The same reference numbers are used throughout the drawings to refer to the same or like parts. Detailed descriptions of well-known functions and structures incorporated herein may be omitted to avoid obscuring the subject matter of the disclosure.

However, the embodiment is not limited to the specific embodiment, but the embodiment includes all modifications, equivalents, and substitutes belonging to the technical scope of the embodiment without departing from the spirit of the present invention.

The terms "first" and "second" can be used to refer to various components, but the components may not be limited to the above terms. The terms will be used to discriminate one component from the other component. For instance, the first component may be referred to the second component and vice versa without departing from the right of the disclosure. The term "and/or" will be used to refer to the combination of plural items or any one item of the plural items.

When a component is referred to as being "connected to" or "linked to" another component, the component may be directly connected to or linked to another component or an intervening component may be present therebetween. In contrast, if a component is referred to as being "directly connected to" or "directly linked to" another component, an intervening component may not be present therebetween.

The terminology used herein is for the purpose of describing particular example embodiments only and is not intended to be limiting of the present inventive concept. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless defined otherwise, the terms including technical and scientific terms used in this specification may have the meaning that can be commonly apprehended by those skilled in the art. The terms, such as the terms defined in the commonly-used dictionary, must be interpreted based on the context of the related technology and must not be interpreted ideally or excessively.

Hereinafter, exemplary embodiments of the present invention will be described in more detail with reference to accompanying drawings. In the following description, for the illustrative purpose, the same components will be assigned with the same reference numerals, and the repetition in the description about the same components will be omitted in order to avoid redundancy.

Hereinafter, a coding unit (CU) may have a rectangular pixel size and a variable size of a 2N × 2N (unit pixel). The CU may include a recursive coding unit structure. Inter prediction, intra prediction, transform, quantization, deblocking filtering, and entropy encoding may be achieved in a unit of a CU.

A prediction unit (hereinafter referred to as 'PU') is a basic unit to perform the inter prediction or the intra prediction. Hereinafter, a block may include the CU or the PU.

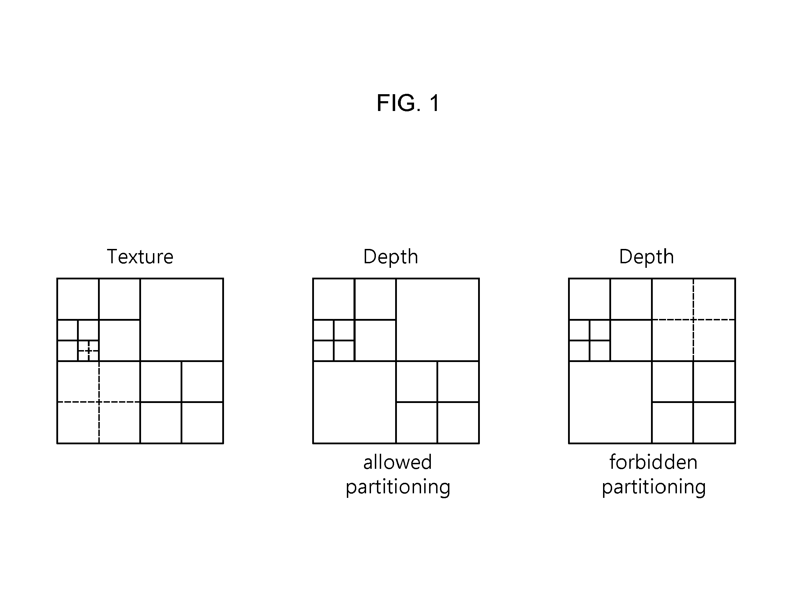

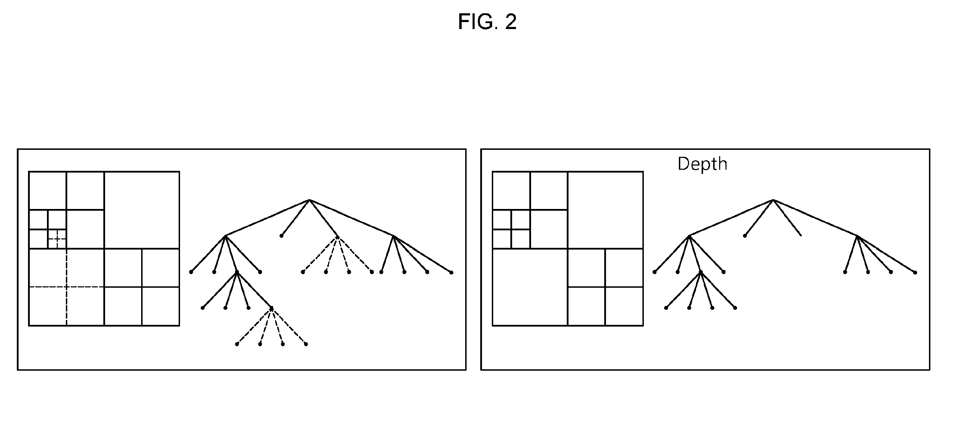

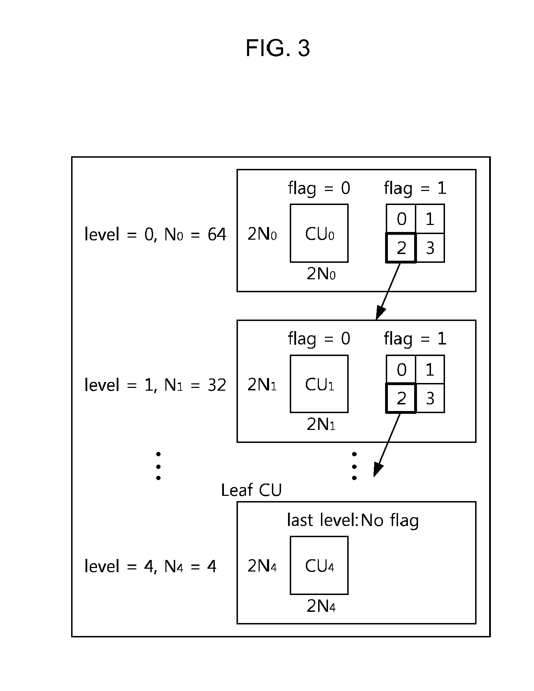

FIGS. 1 and 2 are conceptual diagrams illustrating a method of predicting and encoding depth information collocated with a texture of a 3D multi-view video picture in linkage with split information of a quadtree CU of the texture of the 3D multi-view video picture according to an exemplary embodiment of the present invention. FIG. 3 is a conceptual diagram illustrating a recursive coding unit structure of the CU according to an exemplary embodiment of the present invention.

First, referring to Fig. 3, each coding unit CU has a square shape and may have a variable size of 2Nx2N (unit: pixels). Inter prediction, intra prediction, transform, quantization, and entropy encoding may be performed on a per-coding unit basis. The coding unit CU may include a maximum coding unit LCU and a minimum coding unit SCU. The size of the maximum or minimum coding unit LCU or SCU may be represented by powers of 2 which are 8 or more.

According to an embodiment, the coding unit CU may have a recursive tree structure. Fig. 3 illustrates an example where a side of the maximum coding unit LCU (or CU0) has a size of 2N0 which is 128 (N0=64) while the maximum level or level depth is 5. The recursive structure may be represented by a series of flags. For example, in the case that a coding unit CUk whose level or level depth is k has a flag value of 0, coding on the coding unit CUk is performed on the current level or level depth. When the flag value is 1, the coding unit CUk is split into four independent coding units CUk+1 having a level or level depth of k+1 and a size of Nk+1xNk+1. In this case, the coding unit CUk+1 may be recursively processed until its level or level depth reaches the permissible maximum level or level depth. When the level or level depth of the coding unit CUk+1 is the same as the permissible maximum level or level depth (which is, e.g., 4 as shown in Fig. 4), any further splitting is not permissible.

The size of the maximum coding unit LCU and the size of the minimum coding unit SCU may be included in a sequence parameter set (SPS). The sequence parameter set SPS may include the permissible maximum level or level depth of the maximum coding unit LCU. For example, in the example illustrated in Fig. 3, the permissible maximum level or level depth is 5, and when the side of the maximum coding unit LCU has a size of 128 pixels, five coding unit sizes, such as 128x128 (LCU), 64x64, 32x32, 16x16, and 8x8 (SCU), may be possible. That is, given the size of the maximum coding unit LCU and the permissible maximum level or level depth, the permissible size of the coding unit may be determined.

The size of the coding unit, in the case of high resolution, such as ultra HD, may be restricted to the maximum size of 64x64 in consideration of complexity of the encoder and decoder.

Use of the above-described recursive coding unit structure may provide the following advantages.

First, a size larger than that of the existing 16x16 macro-block may be supported. If an image region of interest is homogeneous, the maximum coding unit LCU may express the image region of interest with a smaller number of symbols than when using a number of small blocks.

Second, compared to when using a fixed size of macro-block, any size of maximum coding unit LCU may be supported, so that the codec may be easily optimized to various contents, applications, and apparatuses. That is, the size of the maximum coding unit LCU, the maximum level or level depth may be properly selected so that the hierarchical block structure may be optimized further than the target application.

Third, irrespective of whether it is a macro-block, sub-macro-block, or extended macro-block, a single unit type of a coding unit LCU is used so that the multilevel hierarchical structure may be simply represented by using the size of the maximum coding unit LCU, the maximum level (or the maximum level depth), and a series of flags. When used together with size-independent syntax representation, the coding unit LCU is enough to indicate one generalized size of syntax item for the remaining coding tools, and such conformity may simplify actual parsing processes. The maximum level value (or maximum level depth value) may be any value and may have a value larger than a value permitted in the existing H.264/AVC encoding scheme. All syntax elements may be indicated in a consistent manner independent from the size of the coding unit CU by using the size-independent syntax representation. The splitting process for the coding unit may be recursively indicated, and syntax elements for the leaf coding unit (the last coding unit in the level) may be defined to the same size regardless of the size of the coding unit. The above representation is very effective in reducing parsing complexity and may make the representation further clarified when a high level or level depth is allowed.

If the hierarchical splitting process is complete, inter prediction or intra prediction may be performed on the leaf node of the coding unit hierarchical unit without being further split. This leaf coding unit is used as the prediction unit PU which is a basic unit of the inter prediction or intra prediction.

For inter prediction or intra prediction, partitioning is fulfilled on the leaf coding unit. That is, partitioning is performed on the prediction unit PU. Here, the prediction unit PU is a basic unit for inter prediction or intra prediction and may be an existing macro-block unit or sub-macro-block unit, or an extended macro-block unit having a size of 32x32 pixels or more or a coding unit.

Partitioning includes asymmetrical partitioning, geometrical partitioning in any shape other than square, and partitioning along an edge direction, which are now described in greater detail.

First, referring to FIG. 3, each CU may a rectangular shape and a variable size of a 2N × 2N (unit pixel). The inter prediction, the intra prediction, the transform, the quantization, the deblocking filtering, and the entropy encoding may be achieved in the CU unit. The CU may include a largest coding unit (hereinafter referred to as 'LCU') and a smallest coding unit (hereinafter referred to as 'SCU'). The size of the LCU and the SCU may represent a radical of 2 having a size of 8 or greater.

The CU according to an embodiment of the present invention may include a recursive tree structure.

FIG. 3 illustrates a case where a size 2N0 of one side of the LCU CU0 is 128 (N0=64), and a largest layer level or layer depth is 5. A recursive structure may be expressed by a series of flags. For example, a flag value of a coding unit CUk having a layer level or a layer depth of k is 0, the coding unit CUk is coded with respect to a current layer level or layer depth. When the flag value of a coding unit CUk is 1, the coding unit CUk having a current layer level or layer depth of k is split into four independent coding units CUk+1. The split coding unit CUk+1 has a layer level or a layer depth of k+1, and a size of Nk+1 × Nk+1. In this case, the coding unit CUk+1 may be represented as a sub-coding unit. Until the layer level or the layer depth of the coding unit CUk+1 reaches a largest allowable layer level or layer depth, the coding unit CUk+1 may be recursively processed. When the layer level or the layer depth of the coding unit CUk+1 is equal to the largest allowable layer level or layer depth (4 in FIG. 3 by way of example), splitting is no longer allowed.

The size of the LCU and the size of the SCU may be included in a sequence parameter set (hereinafter referred to as 'SPS'). The SPS may include a largest allowable layer level or layer depth of the LCU. For example, in a case of FIG. 3, the largest allowable layer level or layer depth is 5. When the size of one side of the LCU is 128 (unit pixel), 5 types of the coating unit size including 128 × 128 (LCU), 64 × 64, 32 × 32, 16 × 16, and 8 × 8 (SCU) are possible. That is, if the size of the LCU and the largest allowable layer level or layer depth are given, an allowable size of the coating unit may be determined. The size of the coating unit may be limited to a largest 64 × 64 pixel size or less by taking into consideration complexity of an encoder and a decoder in a high resolution having a resolution of grade Ultra High Definition (HD) or greater.

Advantages of a case of using a recursive coding unit structure according to the embodiment of the present invention as described above are as follows.

First, a size larger than an existing 16 × 16 macro block may be supported. If an interest image region is homogeneous, the LCU may express the interest image region with the smaller number of symbols as compared with a case of using a plurality of small blocks.

Second, a CODEC may be easily optimized at various contents, applications, and devices by supporting the LCU having various sizes as compared with a case of using a macro block having a fixed size. That is, the hierarchical block structure may be further optimized to a target application by suitably selecting a size of the LCU, the largest layer level or the largest layer depth.

Third, a multi-level hierarchical structure may be very simply represented using the size of the LCU, the largest layer level (or the largest layer depth and a series of flags by using one single unit form called a CU without distinguishing a size of a macro-block from a size of a sub-macro block. When a size-independent syntax representation is used together, it is sufficient to mark one syntax item of a generalized size with respect to remaining coding tools, and such consistency may simplify a real parsing procedure. The largest value of the layer level (or the largest layer depth) may have an optional value, and may have a value greater than a value allowed in an existing H.264/AVC encoding scheme. All syntax elements may be marked to a size of the CU in an independently consistent scheme using the size-independent syntax representation. A splitting process with respect to the CU may be recursively marked. Other syntax elements with respect to a leaf encoding unit (final coding unit of a layer level) may be defined with the same size regardless of the size of the CU.

The above representation is very efficient to reduce parsing complexity. When a large layer level or layer depth is allowed, clarity of the representation may be improved.

If the above hierarchical splitting process is completed, inter prediction or intra prediction with respect to a lead node of a CU layer tree may be performed having no splitting longer. The leaf coding unit serves as a PU which is a basic unit of the inter prediction or the intra prediction. Partition with respect to the leaf coding unit is split for the inter prediction or the intra prediction. That is, the partition splitting is performed with respect to the PU. In this case, the PU means a basic unit for the inter prediction or the intra prediction. The PU may become an existing macro block unit or a sub-macro block unit, and a block unit having a 32 × 32 pixel size or greater.

The partition splitting for the inter prediction or the intra prediction may be achieved in an asymmetric partitioning scheme and in a geometrical partitioning scheme having a predetermined shape except for a square.

FIG. 1 illustrates a procedure of splitting a CU of a given texture (color) in a 3D multi-view video picture. Referring to FIG. 1, a centerly located depth image represents a depth image collocated with the CU of a given texture (color) of the 3D multi-view video picture.

As shown in FIG. 1, in a case of the 3D multi-view video, it is well known that the CU of a given texture (color) of the 3D multi-view video picture is partitioned more frequently as compared with a depth image collocated with the CU of the given texture (color).

According to the embodiment of the present invention, the CU may have a quadtree structure as shown in FIG. 3.

According to the embodiment of the present invention, if the CU of the given texture is no longer split, the encoder does not transmit an indicator to a decoder. The indicator indicates whether to perform a split operation(or procedure) on the depth image or not, and the depth image is collocated with the given texture.

Meanwhile, if the CU of the given texture is further split into a next level or depth, the encoder transmits an indicator to a decoder. The indicator indicates whether to perform a split operation(or procedure) on the depth image or not, and the depth image is collocated with the given texture.

Accordingly, the given CU of the depth image is not split more than the CU of the collocated texture.

In this case, an indicator having 1 bit is transmitted to the decoder so that the decoder may encode by indicating whether a corresponding depth is split or not. If the texture is split upon decoding, the decoder decodes a residual depth to 1 when the indicator from the encoder is split. In contrast, when the indicator from the encoder is not split, the decoder decodes the residual depth to 0.

In a case where a CU of a texture of the 3D multi-view video picture has a recursive quadtree structure, when depth information is encoded and transmitted using a complicate quadtree structure with respect to a depth of the 3D multi-view video picture, the quantity of encoded data to be transmitted is increased in a case of the 3D multi-view video.

Accordingly, as described above, the encoding apparatus predicts and encodes the depth information collocated with a texture of a current 3D multi-view video picture in linkage with split information of a quadtree CU of the texture of the current 3D multi-view video picture.

Another embodiment of the present invention may reduce the quantity of encoded data of depth information to be transmitted and complexity of encoding and decoding by distinguishing a foreground and a background of the texture of a current 3D multi-view video picture to differently determine whether to transmit bit information or not depending upon the foreground and the background, the bit information indicating whether to perform a split operation on the depth information collocated with the texture of the current multi-view video picture.

In detail, another embodiment distinguishes a foreground and a background to check whether there is a depth difference therebetween.
a) Since the precision may be sacrificed when the depth difference is equal to or greater than a predetermined value (background or remote distance object), if the CU of the texture is not split, a separate indicator is not transmitted to the decoder.
b) When the depth difference is less than the predetermined value (foreground or neighboring object), an indicator having 1 bit is sent so that it is indicated whether or not a depth is split to encode the presence of the splitting. If the texture is split upon decoding, the decoder decodes a residual depth to 1 when the indicator from the encoder is split. In contrast, when the indicator from the encoder is not split, the decoder decodes the residual depth to 0.

That is, a given CU of the depth information is not split more than the CU of the collocated texture.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method of predicting and encoding depth information in a multi-view video, the method comprising:
encoding, by an encoding apparatus, depth information collocated with a texture of a current multi-view video picture in linkage with split information of a coding unit of the texture of the current multi-view video picture, the coding unit having a quadtree structure.

2. The method of claim 1, wherein when the coding unit of the texture of the current multi-view video picture is no longer split in the encoding apparatus, the encoding apparatus does not transmit an indicator to a decoder, the indicator indicating whether to perform a split operation on the depth image or not, the depth image being collocated with the texture of the current multi-view video picture.

3. The method of claim 1, wherein when the coding unit of the texture of the current multi-view video picture is further split into a next level or depth in the encoding apparatus, the encoding apparatus transmits an indicator to a decoder, the indicator indicating whether to perform a split operation on the depth image or not, the depth image collocated with the texture of the current multi-view video picture.

4. The method of claim 1, wherein the encoding apparatus transmits an indicator having 1 bit to a decoder so that the decoder indicates whether the depth image is split or not.

5. The method of claim 1, further comprising distinguishing a foreground and a background of the texture of the current multi-view video picture to differently determine whether to transmit bit information or not depending upon the foreground and the background, the bit information indicating whether to perform a split operation on the depth information collocated with the texture of the current multi-view video picture.

6. An apparatus of predicting and encoding depth information in a multi-view video, the apparatus encoding depth information collocated with a texture of a current multi-view video picture in linkage with split information of a coding unit of the texture of the current multi-view video picture, the coding unit having a quadtree structure.

7. The apparatus of claim 6, wherein when the coding unit of the texture of the current multi-view video picture is no longer split in the encoding apparatus, the encoding apparatus does not transmit an indicator to a decoder, the indicator indicating whether to perform a split operation on the depth image or not, the depth image being collocated with the texture of the current multi-view video picture.

8. The apparatus of claim 6, wherein when the coding unit of the texture of the current multi-view video picture is further split into a next level or depth in the encoding apparatus, the encoding apparatus transmits an indicator to a decoder, the indicator indicating whether to perform a split operation on the depth image or not, the depth image collocated with the texture of the current multi-view video picture.

9. The apparatus of claim 6, wherein the encoding apparatus transmits an indicator having 1 bit to a decoder so that the decoder indicates whether the depth image is split or not.

10. The apparatus of claim 6, wherein the encoding apparatus distinguishes a foreground and a background of the texture of the current multi-view video picture to differently determine whether to transmit bit information or not depending upon the foreground and the background, the bit information indicating whether to perform a split operation on the depth information collocated with the texture of the current multi-view video picture.
